# EUROPÄISCHE PATENTSCHRIFT

(11) **EP 0 945 713 B1**
(45) Veröffentlichungstag und Bekanntmachung des Hinweises auf die Patenterteilung: **06.04.2005**
(21) Anmeldenummer: 99105014.7
(22) Anmeldetag: 19.03.1999
(51) Int. Cl.: G01F 15/00, G01F 5/00

(54) **Durchflussreguliergerät für Flüssigkeiten**
Flow control device for liquids
Régulateur de débit pour liquides

(30) Priorität: 23.03.1998 DE 29805136 U
(43) Veröffentlichungstag der Anmeldung: 29.09.1999
(73) Patentinhaber: Ostaco AG, 8902 Urdorf (CH)
(72) Erfinder: Zimmermann, Kurt, CH-8102 Oberengstringen (CH)
(74) Vertreter: Blum, Rudolf Emil Ernst

(56) Entgegenhaltungen:
- EP-A- 0 465 274
- DE-A- 3 115 572
- DE-U- 8 220 193
- GB-A- 2 276 656

## Beschreibung

Die Erfindung betrifft ein Durchflussreguliergerät für Flüssigkeiten, in dessen Durchgangskanal ein Durchfluss-Regulierventil liegt, und mit einer Bypass-Leitung bezüglich des Durchgangskanals, welche Bypass-Leitung mittels zweier Ventile entweder vom Durchgangskanal abschliessbar oder mit diesem verbindbar ist, wobei sich in der Bypass-Leitung ein Durchflussmesser befindet.

Ein solches Durchflussreguliergerät ist durch das deutsche Gebrauchsmuster 82 20 193 bekannt. Der dabei vorhandene Durchflussmesser ist durch die DE 31 15 572 A 1 bekannt.

Beim bewährten, bekannten Durchflussreguliergerät sind die beiden bei der Bypass-Leitung vorhandenen Ventile als Absperrventile ausgebildet, wobei der Ventil-Schliesskörper als kugeliges, drehbares Ventilküken ausgebildet ist. Zum Öffnen oder Schliessen dieser beiden Ventile muss also das Ventilküken in zwei Endstellungen von Hand gedreht werden. Es hat sich in der Praxis gezeigt, dass diese Art der Ventile Nachteile hat. Jedes der beiden Ventile muss also bewusst (vorsätzlich, gewollt) von Hand betätigt werden, und zwar in seine beiden Endstellungen (AUF-ZU). Wenn also der Ist-Wert am Durchflussmesser abgelesen werden soll, müssen die beiden Ventile der Bypass-Leitung einzeln von Hand ganz in die AUF-Stellung gebracht werden. Nach der Messung müssen wiederum beide Ventile einzeln ganz in Ihre ZU-Stellung bewegt werden, damit die Bypass-Leitung nicht mehr durchströmt wird, um alle Bauteile des Durchflussmessers sauber zu halten, wie es ausführlich in der DE-GM 82 20 193 erläutert ist. Es kann nunmehr vorkommen, dass die Bedienungsperson vergisst, die beiden Ventile der Bypass-Leitung nach der Messung wieder zu schliessen. Es wird nunmehr bezweckt, das bekannte Durchflussreguliergerät in dieser Hinsicht zu verbessern.

Das Durchflussreguliergerät gemäss der Erfindung ist dadurch gekennzeichnet, dass jedes der beiden Ventile einen gegen Federkraft aufzustossenden Ventil-Schliesskörper aufweist, und dass die beiden Stössel der beiden Ventile mit einem einzigen handbetätigbaren Joch bewegungsverbunden sind.

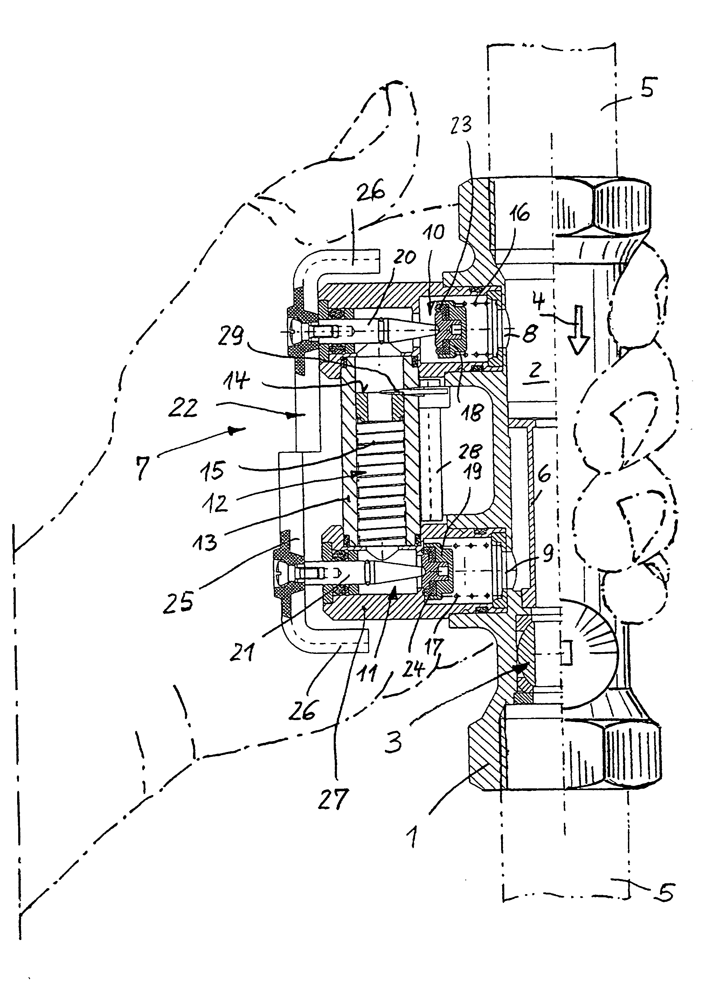

In der Zeichnung ist ein Ausführungsbeispiel der Erfindung dargestellt, und zwar teilweise im Längsschnitt.

Das Durchflussreguliergerät hat ein Hauptrohr 1 mit einem Durchgangskanal 2, in dem ein Durchfluss-Regulierventil 3 liegt. Die Flüssigkeit durchströmt das Hauptrohr 1 in Richtung eines Pfeiles 4. Das Hauptrohr 1 liegt in einem Leitungsstrang 5. Im Hauptrohr, vor dem Durchfluss-Regulierventil 3 liegt eine Messblende 6, deren Bedeutung ausführlich in der DE-GM 82 20 193 erläutert ist.

Neben dem Hauptrohr 1 liegt eine Bypass-Leitung 7, die an der Stelle 8 vom Durchgangskanal 2 abzweigt und an der Stelle 9 wieder in den Durchgangskanal 2 einmündet. Die Bypass-Leitung 7 ist mittels der beiden Ventile 10 und 11 entweder vom Durchgangskanal 2 abschliessbar oder mit diesem verbindbar. In der Bypass-Leitung 7 befindet sich ein Durchflussmesser 12, wie er detailliert in den eingangs genannten beiden Dokumenten erläutert ist. Der Durchflussmesser 12 hat einen im Schauglas 13 beweglich gehaltenen Kolben, dessen vordere Stirnseite 14 mit einer nicht dargestellten Skala auf dem Schauglas 13 die jeweilige Durchflussmenge anzeigt. Hinter dem Kolben befindet sich eine Schraubendruckfeder 15.

Jedes der beiden Ventile 10 und 11 hat einen gegen die Kraft einer Feder 16 bzw. 17 aufzustossenden Ventil-Schliesskörper 18 bzw. 19. Das Ventil 10 hat einen Stössel 20, und das Ventil 11 hat einen Stössel 21. Die beiden Stössel 20 und 21 sind in einem handbetätigbaren Joch 22 gelagert, das sich in der Zeichnung in der oberen Hälfte im betätigten Zustand befindet, wogegen es sich in der Zeichnung in der unteren Hälfte im nicht-betätigten Zustand befindet. Die beiden Ventile 10, 11 sind also durch das Joch 22 gegen die Kraft ihrer Feder 16, 17 zu öffnen; bei nicht-betätigtem Joch 22 werden die beiden Ventile 10, 11 durch die beiden Federn 16, 17 geschlossen.

Aus der Zeichnung ist zu ersehen, dass das Joch 22 im wesentlichen parallel zum Durchgangskanal 2 und damit auch parallel zum Hauptrohr 1 liegt. Die beiden Stössel 20 und 21 stossen einerends auf die Ventil-Schliesskörper 18, 19 und sind anderenends pendelnd im Joch 22 gelagert. Hierdurch wird gewährleistet, dass sich die beiden Stössel 20, 21 nicht verkanten können, auch wenn das Joch 22 nicht genau parallel verschoben wird. Jeder Ventilschliesskörper 18, 19 trägt eine Abdichtscheibe 23, 24, die dem jeweiligen Stössel 20, 21 zugewandt ist.

Das Joch 22 ist U-förmig, wobei der Balken 25 der U-Form die beiden Stössel 20, 21 trägt und die Schenkel 26 der U-Form zu beiden Seiten eines Gehäuses 27 der Bypass-Leitung liegen. Dieses Gehäuse 27 hat eine Führungsschiene 28, entlang der ein Zeiger 29 verschiebbar ist, zum Anzeigen der Soll-Durchflussmenge beim Durchflussmesser.

In der Zeichnung ist die Hand einer Bedienungsperson strichpunktiert gezeigt. Der Handballen liegt beim Joch 22 und die gegenüberliegenden vier Finger umfassen das Hauptrohr 1. Durch den Handballen wird das Joch in die in der oberen Hälfte dargestellte Stellung gedrückt, wobei die beiden Ventile geöffnet werden und der Durchflussmesser in der Bypass-Leitung in Funktion tritt. Wird durch die Hand keine Kraft mehr auf das Durchflussreguliergerät ausgeübt, werden die beiden Ventile 10 und 11 durch die Federn 16, 17 selbsttätig geschlossen und die Bypass-Leitung wird nicht mehr durchströmt.

Das Durchflussreguliergerät wird also mit Vorteil derart am Leitungsstrang 5 montiert, dass das Joch 22 der Bedienungsperson zugewandt ist, damit durch den Handballen sowohl beide Ventile 10, 11 gleichzeitig betätigt werden als auch der Durchflussmesser 12 beim Schauglas 13 leicht abgelesen werden kann. Die gleichzeitige Betätigung der beiden Ventile 10, 11 ist auch dadurch gewährleistet, weil der Handballen auch eine Art Joch bezüglich den gegenüberliegenden vier Fingern ist, so dass also das Joch des Handballens bei der Betätigung des Gerätes gegen das Joch 22 des Gerätes gedrückt wird.

Soll der IST-Wert der Durchflussmenge verändert werden, wird das Durchfluss-Regulierventil 3 verstellt. Dies kann auf verschiedene Weise erfolgen. Das Durchfluss-Regulierventil 3 hat als drehbares Ventilküken einen kugeligen Ventil-Schliesskörper mit einem Durchgangskanal, wie es ausführlich in den beiden eingangs erwähnten Dokumenten erläutert ist. Es ist somit eine stufenlose Regulierung der Durchflussmenge möglich. Das Durchfluss-Regulierventil kann handbetätigt werden (Steuerung); das Ventil 3 kann aber auch in einem Regelkreis (Regelung) liegen und durch einen Stellantrieb betätigt werden.

Es kann noch darauf hingewiesen werden, dass die Ventile 10, 11 bei einem Ansteigen des Druckes in der Bypass-Leitung (durch Temperaturerhöhung) selbsttätig öffnen. Sollte z.B. der Durchflussmesser 12 selbst undicht werden (z.B. defektes Schauglas 13) tritt keine grössere Flüssigkeitsmenge aus und damit kein nennenswerter Wasserschaden auf, da die beiden Ventile 10, 11 in der Ruhestellung den Leitungsstrang 5 nach aussen selbsttätig absperren.

Die dargestellte und beschriebene Betätigung des Durchflussreguliergeräts ist dann möglich, wenn das Hauptrohr 1 nicht heiss ist. Wird ein solches Gerät aber bei Heizungsanlagen verwendet, bei denen der Leitungsstrang 5 und damit das Hauptrohr 1 von heissem Wasser durchströmt wird, umfasst man letzteres nicht in der dargestellten Weise, sondern man drückt mit der Hand direkt auf das Joch in Richtung Hauptrohr 1.

## Patentansprüche

1. Durchflussreguliergerät für Flüssigkeiten, in dessen Durchgangskanal (2) ein Durchfluss-Regulierventil (3) liegt, und mit einer Bypass-Leitung (7) bezüglich des Durchgangskanals (2), welche Bypass-Leitung (7) mittels zweier Ventile (10, 11) entweder vom Durchgangskanal (2) abschliessbar oder mit diesem verbindbar ist, wobei sich in der Bypass-Leitung (7) ein Durchflussmesser (12) befindet, **dadurch gekennzeichnet, dass** jedes der beiden Ventile (10, 11) einen gegen Federkraft (16, 17) aufzustossenden Ventil-Schliesskörper (18, 19) aufweist, und dass die beiden Stössel (20, 21) der beiden Ventile (10, 11) mit einem einzigen handbetätigbaren Joch (22) bewegungsverbunden sind.

2. Gerät nach Anspruch 1, **dadurch gekennzeichnet, dass** das Joch (22) im wesentlichen parallel zum Durchgangskanal (2) liegt, so dass der den Durchgangskanal (2) umgebende Gehäuseteil (1) und das Joch (22) dazu bestimmt sind, zusammen in der Hand einer Bedienungsperson zu liegen, zum Betätigen des Jochs (2).

3. Gerät nach Anspruch 1 oder 2, **dadurch gekennzeichnet, dass** die beiden Stössel (20, 21) pendelnd im Joch (22) gelagert sind.

4. Gerät nach einem der Ansprüche 1 bis 3, **dadurch gekennzeichnet, dass** die Ventilschliesskörper (18, 19) plattenförmig sind und je eine Abdichtscheibe (23, 24) tragen, die den Stösseln (20, 21) zugewandt sind.

5. Gerät nach einem der Ansprüche 1 bis 4, **dadurch gekennzeichnet, dass** das Joch (22) U-förmig ist, wobei der Balken (25) der U-Form die beiden Stössel (20, 21) trägt und wobei die beiden Schenkel (26) der U-Form zu beiden Seiten eines Gehäuses (27) der Bypass-Leitung (7) liegen.

6. Gerät nach Anspruch 5, **dadurch gekennzeichnet, dass** das Gehäuse (27) der Bypass-Leitung (7) eine Führungsschiene (28) mit einem längs dieser verschiebbaren Zeiger (29) aufweist, zum Anzeigen der Soll-Durchflussmenge am Durchflussmesser (12).

## Claims

1. Flow control device for liquids, having a flow control valve (3) located in its flow channel (2), and with a bypass conduit (7) relative to the flow channel (2), which bypass conduit (7) may be either closed off from or connected to the flow channel (2) by means of two valves (10, 11), wherein a flow meter (12) is located in the bypass conduit (7), **characterised in that** each of the two valves (10, 11) comprises a valve closing body (18, 19), which is to be pushed open against spring force (16, 17), and that the two plungers (20, 21) of the two valves (10, 11) are operatively interconnected by a single manually operable yoke (22).

2. Device according to claim 1, **characterised in that** the yoke (22) is arranged substantially parallel to the flow channel (2), so that the housing part (1) surrounding the flow channel (2) and the yoke (22) are adapted to lie in the hand of an operator for operating the yoke (2).

3. Device according to claim 1 or 2, **characterised in that** the two plungers (20, 21) are oscillatingly supported in the yoke (22).

4. Device according to one of the claims 1 to 3, **characterised in that** the valve closing bodies (18, 19) are plate-shaped and each carries a sealing disc (23, 24) facing the plungers (20, 21).

5. Device according to one of the claims 1 to 4, **characterised in that** the yoke (22) has the shape of a U, whereby the bar (25) of the U-shape carries the two plungers (20, 21) and whereby the two legs (26) of the U-shape are located at both sides of a housing (27) of the bypass conduit (7).

6. Device according to claim 5, **characterised in that** the housing (27) of the bypass conduit (7) comprises a guiding rail (28) with a pointer (29) displaceable along same, in order to display the target flow at the flow meter (12).

## Revendications

1. Régulateur de débit pour liquides, dans le canal de passage (2) duquel se trouve une vanne régulatrice de débit (3), et avec une tuyauterie de dérivation (7) relative au canal de passage (2), laquelle tuyauterie de dérivation (7) peut soit être séparée du canal de passage (2), soit être raccordée à ce dernier au moyen de deux vannes (10, 11), un indicateur de débit (12) se trouvant dans la tuyauterie de dérivation (7), **caractérisé en ce que** chacune des deux vannes (10, 11) présente un corps de fermeture de vanne (18, 19) à ouvrir contre la force de ressort (16, 17), et **en ce que** les deux tiges de commande (20, 21) des deux vannes (10, 11) sont liées en mouvement avec une culasse (22) unique actionnable manuellement.

2. Régulateur selon la revendication 1, **caractérisé en ce que** la culasse (22) se trouve pour l'essentiel parallèle au canal de passage (2) de manière à ce que la partie de boîtier (1) entourant le canal de passage (2) et la culasse (22) sont destinées à se trouver ensemble dans la main d'un opérateur, en vue de l'actionnement de la culasse (22).

3. Régulateur selon la revendication 1 ou 2, **caractérisé en ce que** les deux tiges de commande (20, 21) sont logées de manière flottante dans la culasse (22).

4. Régulateur selon l'une quelconque des revendications 1 à 3, **caractérisé en ce que** les corps de fermeture de vanne (18, 19) sont en forme de plaque et portent chacun une rondelle d'étanchéité (23, 24) qui sont tournées vers les tiges de commande (20, 21).

5. Régulateur selon l'une quelconque des revendications 1 à 4, **caractérisé en ce que** la culasse (22) est en forme de U, la barre (25) de la forme en U portant les deux tiges de commande (20, 21) et les deux côtés (26) de la forme en U se trouvant des deux côtés d'un boîtier (27) de la tuyauterie de dérivation (7).

6. Régulateur selon la revendication 5, **caractérisé en ce que** le boîtier (27) de la tuyauterie de dérivation (7) présente un rail de guidage (28) avec un pointeur (29) coulissant le long de ce dernier, en vue de l'indication du débit théorique sur l'indicateur de débit (12).
